# EUROPÄISCHE PATENTSCHRIFT

(11) **EP 2 062 502 B1**
(45) Veröffentlichungstag und Bekanntmachung des Hinweises auf die Patenterteilung: **10.09.2014**
(21) Anmeldenummer: 08017555.7
(22) Anmeldetag: 07.10.2008
(51) Int. Cl.: A47B 47/00, A47B 96/02, B65G 1/02

(54) **Lagerregal**
Shelf
Rayonnage de stockage

(30) Priorität: 23.11.2007 DE 102007056589
(43) Veröffentlichungstag der Anmeldung: 27.05.2009
(73) Patentinhaber: BITO-Lagertechnik Bittmann GmbH, 55590 Meisenheim (DE)
(72) Erfinder: Herrmann, Carsten, 55743 Fischbach (DE); Roßbach, Rudolf, 95362 Kupferberg (DE)
(74) Vertreter: Richardt Patentanwälte PartG mbB

(56) Entgegenhaltungen:
- EP-A- 0 882 660
- US-A- 3 885 675

## Beschreibung

Die Erfindung betrifft ein Lagerregal nach dem Oberbegriff des Patentanspruchs 1.

Ein solches Lagerregal ist aus der EP 0 882 660 B1 bekannt. Bei dem bekannten Regal sind in kastenförmigen Längsträgern an der oberen und inneren Fläche mehrere nach oben offene Aussparungen in Form von Schlitzen ausgebildet, in die Halteelemente von Querträgern von oben eingesetzt und mittels federnder Endabschnitte in den Schlitze verrastet werden. Durch die nach oben offenen Schlitze wird die Festigkeit der Längsträger geschwächt. Um ihr Durchbiegen bei höheren Belastungen zu vermeiden, sind größere Materialstärken erforderlich, was zu erhöhten Kosten führt. Durch die einseitige Fixierung wird die Biegefestigkeit der Längsträger beeinträchtigt. Außerdem trägt diese Fixierung nicht zu einer Stabilisierung eines Verdrehens der Längsträger bzw. der Querträger bei.

Die der Erfindung zugrunde liegende Aufgabe besteht deshalb darin, das Lagerregal der eingangs genannten Art so auszugestalten, dass bei möglichst geringem Material- und Montageaufwand die Biegefestigkeit der Längsträger gesteigert und ihre drehsichere Lagerung gesichert werden kann.

Diese Aufgabe wird erfindungsgemäß durch das Lagerregal nach Anspruch 1 gelöst.

Das erfindungsgemäße Lagerregal ist einfach und schnell montierbar. Da in den Längsträgern geschlossene Öffnungen vorgesehen werden, wird ihre Biegesteifigkeit nicht beeinträchtigt. Aufgrund der Ausgestaltung der Öffnungen und der Vorsprünge wird nach der Montage der Querträger an den Längsträgern durch den Eingriff der Vorsprünge in den Öffnungen und durch den Kontakt des unteren Randes des Längsträgers auf den Vorsprüngen die Verdrehungssicherheit zwischen Längs- und Querträger gewährleistet.

Durch die Ausgestaltung des Lagerregals nach Anspruch 2 lässt sich das eine Ende der Querträger auf einfache Weise maschinell ausgestalten.

Bei dem Lagerregal nach Anspruch 3 wird das Einführen der Vorsprünge in die Öffnungen und somit das Montieren der Querträger an den Längsträgern durch die Führung der sich verjüngenden Flächen leichter.

Die Ausgestaltung des Lagerregals nach Anspruch 4 führt ebenfalls zu einer Kosten reduzierenden Fertigung.

Das Lagerregal nach Anspruch 5 ermöglicht eine Steigerung der Drehsicherheit.

In der Ausgestaltung des Lagerregals nach Anspruch 6 ist durch die vorgegebenen Formen festgelegt, welches Öffnungspaar den Vorsprüngen des Querträgers zugeordnet werden muss.

Mit der in Anspruch 7 angegebenen Maßgabe lassen sich Montagetoleranzen und unterschiedliche Breiten der Längsträger leicht ausgleichen.

In der Ausbildung nach Anspruch 8 wird gewährleistet, dass die Querträger an ihrem einen Ende einen Anschlag haben und ihre Steifigkeit verbessert ist.

In der Ausgestaltung der Querträger für das Lagerregal nach Anspruch 9 lässt sich deren anderes Ende durch einfaches Aufsetzen sicher montieren.

Die Ausgestaltung des Querträgerendes nach Anspruch 10 erhöht einerseits die Steifigkeit in diesem Bereich und gestattet andererseits das Befestigen der Lasche an dem Längsträger, beispielsweise mit Hilfe einer Verschraubung, wofür eine entsprechende Bohrung in der Lasche vorgesehen ist.

Anhand von Zeichnungen werden Ausführungsbeispiele der Erfindung näher erläutert. Es zeigen:
Fig. 1 einen Teil eines Lagerregals nach der Erfindung;
Fig. 2 eine Stirnansicht des Querträgers von seinem anderen Ende aus gesehen, wobei der vordere Längsträger weggelassen ist;
Fig. 3 perspektivisch das eine Ende des Querträgers, das für den Eingriff in die Öffnungen in dem Längsträger vorgesehen ist;
Fig. 4 perspektivisch den Querträger, der an seinem einen Ende mit den Vorsprüngen in die Öffnungen des Längsträgers eingeführt ist;
Fig. 5 eine Stirnansicht des Längsträgers mit den Vorsprüngen des einen Endes des Querträgers eingeführt in die Öffnungen des Längsträgers, und
Fig. 6 die Ausgestaltung des anderen Endes des Querträgers.

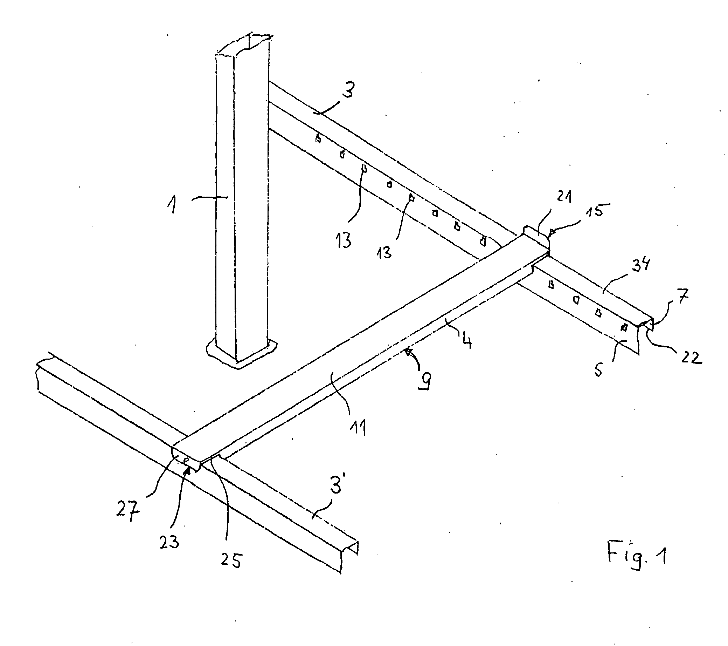

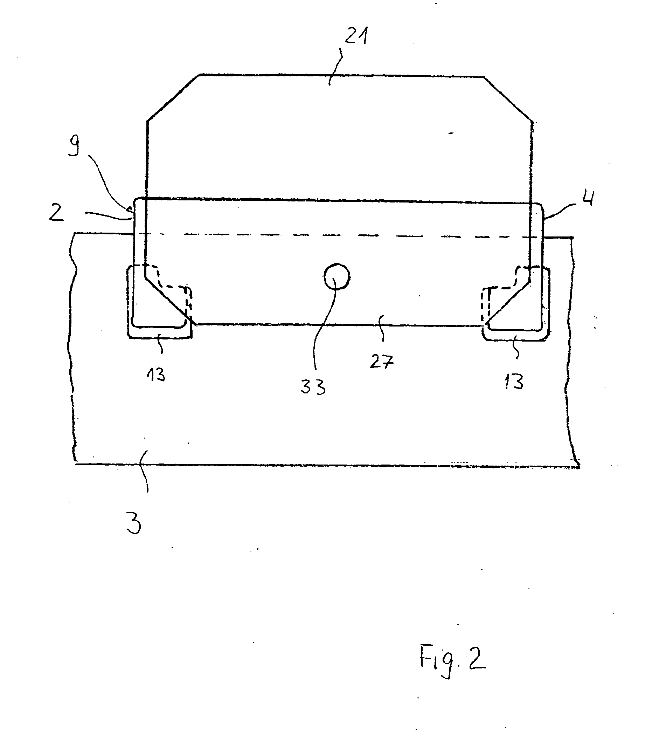

Das in Fig. 1 in einem Teilausschnitt gezeigte Lagerregal besteht aus vertikalen Stützen 1, an denen paarweise gegenüberliegend horizontale Längsträger 3 befestigt sind, wobei zur Erhöhung der Regalstabilität weitere nicht gezeigte Verstrebungen vorgesehen werden können. Die Lagerflächen des Lagerregals werden von Querträgern 9 bereit gestellt, die an ihrem einen Ende 15 mittels einer Durchsteckverbindung und an ihrem anderen Ende 23 mittels einer Aufsteckverbindung schnell und einfach festgelegt werden können. Die Querträger 9 haben im Wesentlichen ein U-förmiges Profil mit Schenkeln 2 und 4, die durch einen eine Tragfläche 11 bildenden Steg verbunden sind. Die Schenkel 2 und 4 sind, wie aus Fig. 2 zu ersehen ist, an ihren freien Enden nach innen parallel zur Tragfläche 11 und dann nach oben parallel zu den Schenkeln abgebogen, was die Stabilität der Querträger 9 erhöht und die Ausbildung von Vorsprüngen 17 und 19 an dem einen Ende 15 vereinfacht.

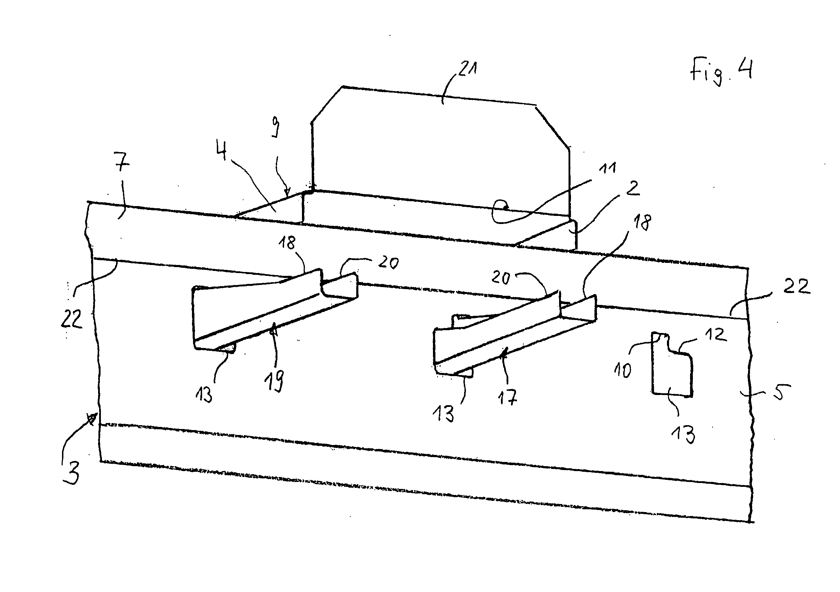

Wie aus Fig. 1 und 4 zu ersehen ist, hat der Längsträger 3 eine sich vertikal nach unten erstreckende längere innere Seitenwand 5 und eine sich nach unten erstreckende kürzere äußere Seitenwand 7, die in einem Rand 22 endet. In der inneren längeren Seitenwand 5 des Längsträgers 3 sind in vorgegebenen Abständen geschlossene Öffnungen 13 ausgebildet. Die geschlossenen Öffnungen 13 haben einen abgesetzten oberen Rand mit einem höheren Teil 10 und einem tieferen Teil 12. Die benachbarten Öffnungen 13 sind so angeordnet, dass abwechselnd die höheren Teile 10 bzw. die tieferen Teile 12 einander paarweise gegenüber liegen.

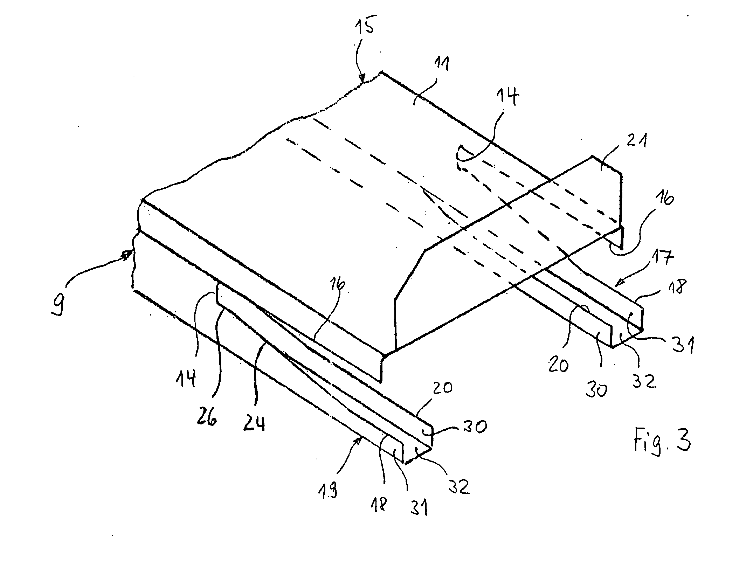

Gemäß Fig. 3 und 4 hat das eine Ende 15 des Querträgers 9 einen unteren Teil mit zwei beabstandeten Vorsprüngen 17 und 19, deren Form und Abstand so gestaltet ist, dass sie in benachbarte Öffnungen 13 in dem Längsträger 3 eingeführt werden können. Das eine Ende 15 des Querträgers 9 hat ferner einen oberen Teil in Form eines U-Profils mit nach unten weisenden Schenkeln, die in einem Rand 16 enden und mit den äußeren Schenkeln 31 der Vorsprünge 17 und 19 in einem Ende 14 mit im Wesentlichen vertikaler Wand zusammenlaufen. Jeder der Vorsprünge 17, 19 hat ein U-Profil mit nach oben weisenden Schenkeln 30 und 31, die durch einen Steg 32 verbunden sind. Wie aus Fig. 2 zu sehen ist, sind die Vorsprünge 17 und 19 Fortsetzungen der nach unten eingebogenen U-Profile.

Im Bereich ihres freien Endes hat jeder Vorsprung 17, 19 an dem äußeren Schenkel 31 eine Fläche 18 und an dem freien Ende des inneren Schenkels 30 eine Fläche 20, wobei die Flächen 18 und 20 bezüglich der Tragfläche 11 alle den gleichen Abstand haben. Die äußeren Schenkel 31 der Vorsprünge 17 und 19 verjüngen sich ausgehend vom Ende 14 unter einem steileren Winkel zur Fläche 18 hin als der Schenkel 30 zur Fläche 20 hin. Der schräge Abschnitt 24 geht vor dem Ende 14 in einen zur Fläche 18 parallelen Abschnitt 26 über, dessen Länge das zwei- bis sechsfache der Wandstärke des Längsträgers 3 beträgt.

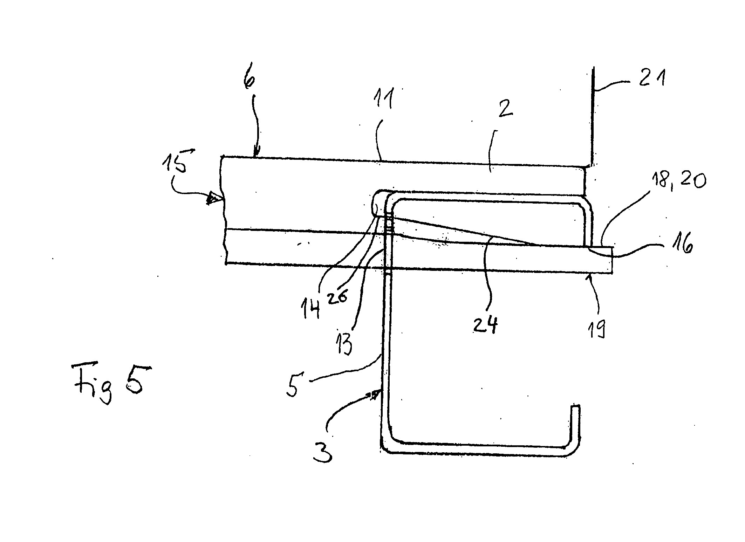

Aus Fig. 4 und 5 ist die Zuordnung des einen Endes 15 des Querbalkens 9 zu dem Längsträger 3 zu sehen, wenn die Vorsprünge 17, 19 durch das zugehörige Öffnungspaar 13 in der längeren Seitenwand 5 hindurch gesteckt sind. Der Eingriff erfolgt dabei so, dass die inneren Schenkel 30 einander zugewandt sind und mit der Öffnung 13 in dem Bereich in Eingriff stehen, in dem der Teil 12 des oberen Randes die kleinere Höhe hat. Die äußeren Schenkel 31 der Vorsprünge 17 und 19 stehen im Gegensatz dazu mit der Öffnung 13 in dem Bereich in Eingriff, in welchem der Teil 10 des oberen Randes der Öffnung die größere Höhe hat. Bei dieser Anordnung ist eine eindeutige Zuordnung des Querträgers 9 zu einem Öffnungspaar 13 der längeren Seitenwand 5 des Längsträgers 3 vorgegeben, wobei durch die sich verjüngenden Abschnitte der Schenkel eine gute Führung erreicht wird. Aufgrund der unterschiedlichen Höhen der Schenkel 30 und 31 der jeweiligen Vorsprünge 17 und 19 im Bereich ihrer Enden 14 und der entsprechenden Ausgestaltung der Öffnungen 13 mit einem Teil 10 des oberen Randes, der vom Boden der Öffnung 13 einen größeren Abstand hat als der obere Teil 12 des oberen Randes, ergibt sich eine drehsichere Verbindung zwischen Querträger 9 und Längsträger 3, die noch dadurch gesteigert wird, dass der Rand 22 der kürzeren nach unten weisenden Seitenwand 7 des Längsträgers 3 auf den Flächen 18 und 20 der Vorsprünge 17 und 19 aufliegt, während die freien Ränder der Schenkel 2 und 4 des Querträgers 9 auf der Oberfläche 33 (Fig. 1) des Längsträgers 3 aufliegen können.

Die Vorsprünge 17 und 19 stehen über den Rand 22 bzw. über den Endteil des Querträgers 9 vor, der eine aus seiner Tragfläche 11 vertikal nach oben abgebogene Lasche 21 aufweist, die als Anschlag und zur Versteifung dient.

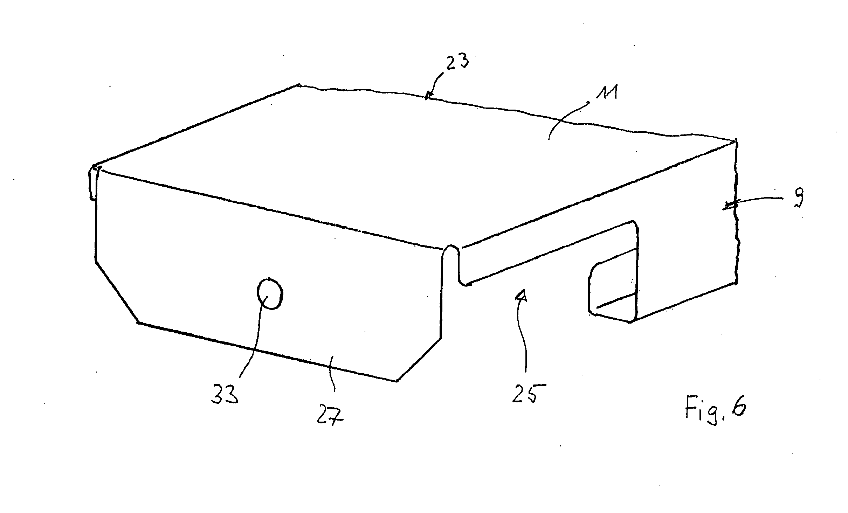

Das andere Ende 23 des Querträgers 9 ist wie in Fig. 1, 2, 3 und 6 gezeigt ausgestaltet. Das andere Ende 23 des Querträgers 9 hat eine Aussparung 25, die für ein Übergreifen des Längsträgers 3' ausgebildet ist. Am freien Ende hat die Tragfläche 11 eine nach unten abgebogene Lasche 27 mit einer Bohrung 33. Wie aus Fig. 1 zu sehen ist, kann das andere Ende 23 des Querträgers 9 an dem Längsträger 3' mit Hilfe einer durch die Bohrung 33 geführten Schraube fixiert werden. Natürlich kann das andere Ende 23 des Querträgers 9 wie das eine Ende 15 ausgebildet sein. In diesem Fall ist der Längsträger 3' wie der Längsträger 3 ausgebildet.

### Bezugszeichen:

- 1 -: Stütze
- 2 -: Schenkel von 9/15
- 3 -: Längsträger
- 4 -: Schenkel von 9/15
- 5 -: Seitenwand 3 lang innen
- 7 -: Seitenwand 3 kurz außen
- 9 -: Querträger
- 10 -: hoher Teil v. 13
- 11 -: Tragfläche von 9
- 12 -: niedriger Teil v. 13
- 13 -: Öffnung in 3
- 14 -: Ende von 17, 19
- 15 -: ein Ende von 9
- 16 -: Randende von 2, 4, Seite
- 17 -: Vorsprung
- 18 -: Fläche
- 19 -: Vorsprung
- 20 -: Fläche
- 21 -: Lasche v. 6
- 22 -: Rand von 7/3
- 23 -: anderes Ende von 9
- 24 -: schräger Abschnitt v. 18
- 25 -: Aussparung
- 26 -: gerader Abschnitt v. 18
- 27 -: Lasche v. 23/9
- 30 -: Schenkel v. 17/19
- 31 -: Schenkel v. 17/19
- 32 -: Steg v. 17/19
- 33 -: Loch
- 34 -: Oberfläche von 3

## Patentansprüche

1. Lagerregal
- mit vertikal angeordneten Stützen (1),
- mit an den Stützen (1) befestigten Längsträgern (3), die horizontal und jeweils paarweise einander gegenüberliegend angeordnet sind und von denen jeder eine innere Seitenwand (5) und eine äußere Seitenwand (7) aufweist, und
- mit Querträgern (9), die an den Längsträgern (3) im Wesentlichen senkrecht zu diesen angebracht sind und Tragflächen (11) aufweisen,
**dadurch gekennzeichnet,**
- **dass** in der inneren Seitenwand (5) eines jeden Längsträgers (3) wenigstens zwei voneinander beabstandete Öffnungen (13) mit einer geschlossenen Form ausgebildet sind,
- **dass** jeder Querträger (9) an wenigstens einem seiner Enden (15) als Verlängerung wenigstens zwei im Abstand der Öffnungen (13) angeordnete Vorsprünge (17, 19) aufweist, deren größte Querschnitte im Wesentlichen der Form der Öffnungen (13) entsprechen,
- **dass** die äußere Seitenwand (7) jedes Längsträgers (3) in ihrer vertikalen Erstreckung kürzer als die innere Seitenwand (5) ist und in einem nach unten weisenden Rand (22) endet, und
- **dass** jeder Vorsprung (17, 19) im Bereich seiner freien Enden mit seiner der Tragfläche (11) des Querträgers (9) zugewandten Fläche (18, 20) an dem nach unten weisenden Rand (22) der äußeren kürzeren Seitenwand (7) des Längsträgers (3) anliegt, wenn die Vorsprünge (17, 19) durch die Öffnungen (13) im Wesentlichen bis zu ihrem an den Querträger (9) anschließenden Ende (14) hindurchgeschoben sind.

2. Lagerregal nach Anspruch 1, **dadurch gekennzeichnet, dass** der Querträger (9) an dem einen Ende (15) einen unteren Endteil, an dem die Vorsprünge (17, 19) ausgebildet sind, und einen vom unteren Endteil vertikal beabstandeten oberen Endteil aufweist, der mit seiner von der Tragfläche (11) des Querträgers (9) abgewandten Seite (16) auf der Oberseite des Längsträgers (3) aufliegt.

3. Lagerregal nach Anspruch 1 oder 2, **dadurch gekennzeichnet, dass** die Vorsprünge (17, 19) ausgehend von ihrem an den Querträger (9) anschließenden Ende (14) sich zu dem Bereich ihrer freien Enden hin verjüngend ausgebildet sind.

4. Lagerregal nach einem der vorhergehenden Ansprüche, **dadurch gekennzeichnet, dass** die Vorsprünge (17, 19) einen U-förmigen Querschnitt mit zwei gegenüberliegenden Schenkeln (30, 31) und einem sie verbindenden Steg (32) haben, und dass die freien oberen Ränder der Schenkel (30, 31) der Vorsprünge (17, 19) im Bereich ihrer freien Enden die Fläche (18, 19) für das Anliegen an dem nach unten weisenden Rand (22) der äußeren Seitenwand (7) des Längsträgers (3) bilden.

5. Lagerregal nach Anspruch 4, **dadurch gekennzeichnet, dass** die Schenkel (30, 31) eines jeden Vorsprungs (17, 19) an seinem an dem Querträger (9) anschließenden Ende unterschiedliche Höhen haben und dass die zugehörigen geschlossenen Öffnungen (13) an ihrem oberen Rand (10, 12) entsprechend ausgespart sind.

6. Lagerregal nach Anspruch 5, **dadurch gekennzeichnet, dass** die die kleineren Höhen aufweisenden Schenkel (30) der beiden Vorsprünge (17, 19) eines jeden Querträgers (9) in der Erstreckungsrichtung der Längsträger (3) einander gegenüberliegend angeordnet sind.

7. Lagerregal nach einem der Ansprüche 2 bis 6, **dadurch gekennzeichnet, dass** die Vorsprünge (17, 19) über den oberen Teil des Querträgers (9) hinausragen.

8. Lagerregal nach einem der Ansprüche 2 bis 7, **dadurch gekennzeichnet, dass** der obere Teil des Querträgers (9) eine unter 90° nach oben abgewinkelte Lasche (21) aufweist.

9. Lagerregal nach einem der vorhergehenden Ansprüche, **dadurch gekennzeichnet, dass** jeder Querträger (9) an seinem anderen Ende (23) eine Aussparung (25) aufweist, die den Längsträger (3) wenigstens teilweise übergreift.

10. Lagerregal nach Anspruch 9, **dadurch gekennzeichnet, dass** das andere Ende (23) des Querträgers (9) eine unter 90° nach unten abgewinkelte Lasche (27) aufweist, die an der äußeren Seitenwand (7) des Längsträgers (3) befestigt ist.

## Claims

1. A storage shelf
- having vertically arranged supports (1),
- having longitudinal beams (3), which are fixed to the supports (1), are arranged horizontally and opposite one another in pairs, and of which each has an inner side wall (5) and an outer side wall (7), and
- having transverse beams (9), which are attached to the longitudinal beams (3) substantially perpendicularly thereto and have supporting faces (11),
**characterised in that**
- at least two openings (13) spaced from one another and having a closed form are formed in the inner side wall (5) of each longitudinal beam (3),
- each transverse beam (9), at least at one of its ends (15), has at least two protrusions (17, 19), which are arranged as an extension in the distance between the openings (13) and of which the largest cross sections correspond substantially to the form of the openings (13),
- the outer side wall (7) of each longitudinal beam (3) is shorter in its vertical extension than the inner side wall (5) and ends in a downwardly pointing edge (22), and
- each protrusion (17, 19), in the region of its free ends, bears via its face (18, 20) facing the supporting face (11) of the transverse beam (9) on against the downwardly pointing edge (22) of the outer shorter side wall (7) of the longitudinal beam (3) when the protrusions (17, 19) are slid though the openings (13) substantially as far as their end (14) adjoining the transverse beam (9).

2. The storage shelf according to Claim 1, **characterised in that** the transverse beam (9) at one end (15) has a lower end part, on which the protrusions (17, 19) are formed, and has an upper end part, which is vertically distanced from the lower end part and which rests, via its side (16) facing away from the supporting face (11) of the transverse beam (9), on the upper side of the longitudinal beam (3).

3. The storage shelf according to Claim 1 or 2, **characterised in that** the protrusions (17, 19) are tapered starting from their end (14) adjoining the transverse beam (9) to the region of their free ends.

4. The storage shelf according to one of the preceding claims, **characterised in that** the protrusions (17, 19) have a U-shaped cross section with two opposed limbs (30, 31) and a web (32) connecting said limbs, and **in that** the free upper edges of the limbs (30, 31) of the protrusions (17, 19), in the region of their free ends, form the face (18, 19) for the bearing against the downwardly pointing edge (22) of the outer side wall (7) of the longitudinal beam (3).

5. The storage shelf according to Claim 4, **characterised in that** the limbs (30, 31) of each protrusion (17, 19) have different heights at the end of said protrusion adjoining the transverse beam (9), and **in that** the associated closed openings (13) are recessed accordingly at their upper edge (10, 12).

6. The storage shelf according to Claim 5, **characterised in that** the branches (30) having the shorter heights of the two protrusions (17, 19) of each transverse beam (9) are arranged opposite one another in the direction of extension of the longitudinal beams (3).

7. The storage shelf according to one of Claims 2 to 6, **characterised in that** the protrusions (17, 19) protrude beyond the upper part of the transverse beam (9).

8. The storage shelf according to one of Claims 2 to 7, **characterised in that** the upper part of the transverse beam (9) has a tab (21) bent upwardly at 90°.

9. The storage shelf according to one of the preceding claims, **characterised in that** each transverse beam (9), at its other end (23), has a recess (25), which overlaps the longitudinal beam (3) at least in part.

10. The storage shelf according to Claim 9, **characterised in that** the other end (23) of the transverse beam (9) has a tab (27) that is bent downwardly at 90° and that is fixed to the outer side wall (7) of the longitudinal beam (3).

## Revendications

1. Étagère de stockage
- avec des montants (1) agencés verticalement,
- avec des supports longitudinaux (3) fixés aux montants (1), lesquels sont agencés horizontalement et respectivement par paires les uns en face des autres et comportent respectivement une paroi latérale intérieure (5) et une paroi latérale extérieure (7), et
- avec des supports transversaux (9) fixés aux supports longitudinaux (3), essentiellement perpendiculairement à ceux-ci, et comportant des surfaces de support (11),
**caractérisée en ce que**
- au moins deux ouvertures (13) espacées les unes des autres avec une forme fermée sont réalisées dans la paroi latérale intérieure (5) de chacun des supports longitudinaux (3),
- chaque support transversal (9) comporte au moins deux saillies (17, 19) agencées de façon espacée par rapport aux ouvertures (13), en tant que prolongements à au moins l'une de ses extrémités (15), dont les sections transversales les plus grandes correspondent essentiellement à la forme des ouvertures (13),
- la paroi latérale extérieure (7) de chaque supports longitudinaux (3) est plus courte dans son étendue verticale que la paroi latérale intérieure (5) et se termine en un bord (22) orienté vers le bas, et
- dans la région de ses extrémités libres, chaque saillie (17, 19) s'applique sur le bord (22) orienté vers le bas de la paroi latérale extérieure (7) plus courte du supports longitudinaux (3), avec sa surface (18, 20) tournée vers la surface de support (11) du support transversal (9), lorsque les saillies (17, 19) sont insérées dans les ouvertures (13) essentiellement jusqu'à leur extrémité (14) prolongeant le support transversal (9).

2. Étagère de stockage selon la revendication 1, **caractérisée en ce qu'**à une extrémité (15), le support transversal (9) comporte une partie finale inférieure sur laquelle sont formées les saillies (17, 19) et une partie finale supérieure espacée verticalement de la partie finale inférieure, qui repose sur le côté supérieur du support longitudinal (3) avec son côté (16) détourné de la surface de support (11) du support transversal (9).

3. Étagère de stockage selon la revendication 1 ou 2, **caractérisée en ce que** les saillies (17, 19) sont conçues de manière à s'affiner vers la région de leurs extrémités libres, à partir de leur extrémité (14) prolongeant le support transversal (9).

4. Étagère de stockage selon l'une des revendications précédentes, **caractérisée en ce que** les saillies (17, 19) possèdent une section transversale en forme de U avec deux branches opposées (30, 31) et une âme (32) reliant celles-ci, et **en ce que** dans la région de leurs extrémités libres, les bords supérieurs libres des branches (30, 31) des saillies (17, 19) forment la surface (18, 19) destinée à s'appliquer sur le bord (22) orienté vers le bas des paroi latérale extérieure (7) du support longitudinal (3).

5. Étagère de stockage selon la revendication 4, **caractérisée en ce que** les branches (30, 31) de chaque saillie (17, 19) présentent différentes hauteurs à leur extrémité prolongeant le support transversal (9), et **en ce que** les ouvertures (13) fermées correspondantes sont évidées de façon correspondante sur leur bord supérieur (10, 12).

6. Étagère de stockage selon la revendication 5, **caractérisée en ce que** les branches (30) des deux saillies (17, 19) de chaque support transversal (9) qui présentent les hauteurs plus petites sont agencées les unes en face des autres dans la direction d'extension des supports longitudinaux (3).

7. Étagère de stockage selon l'une des revendications 2 à 6, **caractérisée en ce que** les saillies (17, 19) font saillie au-delà de la partie supérieure du support transversal (9).

8. Étagère de stockage selon l'une des revendications 2 à 7, **caractérisée en ce que** la partie supérieure du support transversal (9) comporte une patte (21) coudée de 90° vers le haut.

9. Étagère de stockage selon l'une des revendications précédentes, **caractérisée en ce qu'**à son autre extrémité (23), chaque support transversal (9) comporte un évidement (25) chevauchant au moins partiellement le support longitudinal (3).

10. Étagère de stockage selon la revendication 9, **caractérisée en ce que** l'autre extrémité (23) du support transversal (9) comporte une patte (27) coudée de 90° vers le bas, laquelle est fixée à la paroi latérale extérieure (7) du support longitudinal (3).
